# EUROPEAN PATENT APPLICATION

(11) **EP 2 043 226 A2**
(43) Date of publication of application: **01.04.2009**
(21) Application number: 08016823.0
(22) Date of filing: 25.09.2008
(51) Int. Cl.: H02J 7/02

(54) **Power transmission control device, power transmitting device, power-transmitting-side device, and non-contact power transmission system**

(30) Priority: 26.09.2007 JP 2007249375
(71) Applicant: Seiko Epson Corporation, Shinjuku-ku, Tokyo 163-0811 (JP); Sony Ericsson Mobile Communications Japan, Inc., Tokyo 108-0075 (JP)
(72) Inventor: Jin, Mikimoto, Suwa-shi Nagano-ken (JP); Yoda, Kentaro, Suwa-shi Nagano-ken (JP); Sogabe, Haruhiko, Suwa-shi Nagano-ken (JP); Onishi, Kota, Suwa-shi Nagano-ken (JP); Kondo, Yoichiro, Suwa-shi Nagano-ken 92-8502 (JP); Kato, Hiroshi, Minato-ku Tokyo 108-0075 (JP); Suzuki, Kuniharu, Minato-ku Tokyo 108-0075 (JP); Suzuki, Katsuya, Minato-ku Tokyo 108-0075 (JP); Yamazaki, Manabu, Minato-ku Tokyo 108-0075 (JP)
(74) Representative: Hoffmann, Eckart

(57) **Abstract**

A power transmission control device provided in a non-contact power transmission system includes a power-transmitting-side control circuit that controls power transmission to a power receiving device, an actuator control circuit that controls the operation of an actuator that moves the position of a primary coil in an XY plane, a relative position detection signal generation circuit that generates a relative position detection signal relating to the primary coil and a secondary coil based on a coil end voltage or a coil current of the primary coil, and a primary coil position control circuit that causes the actuator control circuit to move the position of the primary coil in the XY plane so that the relative positional relationship between the primary coil and the secondary coil indicated by the relative position detection signal is within an allowable range.

## Description

### BACKGROUND

The present invention relates to a power transmission control device, a power transmitting device, a power-transmitting-side device, a non-contact power transmission system, and the like.

In recent years, non-contact power transmission (contactless power transmission) that utilizes electromagnetic induction to enable power transmission without metal-to-metal contact has attracted attention. As application examples of non-contact power transmission, charging a portable telephone, charging a household appliance (e.g., cordless telephone handset or watch), and the like have been proposed.

JP-A-2006-60909 discloses a non-contact power transmission device using a primary coil and a secondary coil, for example.

JP-A-2005-6460 discloses technology that detects misalignment of a primary coil and a secondary coil in a non-contact power transmission system. According to the technology disclosed in JP-A-2005-6460, whether or not the relative positional relationship between the primary coil and the secondary coil is correct is detected based on an output voltage of a rectifier circuit of a power receiving device. When the relative positional relationship between the primary coil and the secondary coil is correct, a light-emitting diode (LED) is turned ON to notify the user that the relative positional relationship between the primary coil and the secondary coil is correct. When the relative positional relationship between the primary coil and the secondary coil is incorrect, the LED is not turned ON. In this case, the user manually adjusts the positional relationship between the primary coil and the secondary coil.

In order to accurately position the primary coil and the secondary coil in a non-contact power transmission system, it is desirable to use a dedicated cradle (primary-side electronic instrument including a power transmitting device) corresponding to a secondary-side instrument including a power receiving device, for example. For example, in order to charge a battery of a portable telephone terminal manufactured by Company A, it is desirable to provide a cradle dedicated to the portable telephone terminal manufactured by Company A. In this case, since it is necessary to provide a dedicated cradle corresponding to each secondary-side instrument, the versatility of the cradle cannot be ensured.

For example, when charging a battery of a portable terminal utilizing a non-contact power transmission system, the external shape (design) of the portable terminal and the secondary coil installation position generally differ depending on the manufacturer even if the size of the portable terminal is identical. Therefore, it is difficult to deal with a plurality of portable terminals produced by different manufacturers using one cradle (charger).

Different types of terminals (e.g., portable telephone terminal and PDA terminal) differ in size, shape (design), and secondary coil installation position. Therefore, it is difficult to deal with different types of terminals using one cradle.

For example, if a portable terminal can be charged merely by placing the portable terminal in a given area of a structure (e.g., desk) having a flat surface without using a dedicated cradle, the convenience of a non-contact power transmission system can be significantly improved.

However, the accurate position of a secondary coil of a portable terminal placed at an approximate position in a given area cannot be determined for the above-described reasons. Therefore, such a next-generation non-contact power transmission system cannot be implemented by the current technology.

According to the technology disclosed in JP-A-2005-6460, although the user can be notified whether or not the primary coil and the secondary coil are positioned correctly, the user must manually adjust the positional relationship between the primary coil and the secondary coil when the positional relationship is incorrect.

### SUMMARY

According to one aspect of the invention, there is provided a power transmission control device that controls power transmission of a power transmitting device of a non-contact power transmission system, the non-contact power transmission system transmitting power from the power transmitting device to a power receiving device via non-contact power transmission through a primary coil and a secondary coil that are electromagnetically coupled, the power transmission control device comprising:
a power-transmitting-side control circuit that controls power transmission to the power receiving device;
an actuator control circuit that controls the operation of an actuator, the actuator moving the position of the primary coil in an XY plane;
a relative position detection signal generation circuit that generates a relative position detection signal relating to the primary coil and the secondary coil based on a coil end voltage or a coil current of the primary coil; and
a primary coil position control circuit that causes the actuator control circuit to move the position of the primary coil in the XY plane so that the relative positional relationship between the primary coil and the secondary coil indicated by the relative position detection signal is within an allowable range.

According to another aspect of the invention, there is provided a power transmitting device comprising:
the above power transmission control device; and
the primary coil.

According to another aspect of the invention, there is provided a power-transmitting-side device of a non-contact power transmission system, the power-transmitting-side device comprising:
the above power transmitting device;
an actuator, the operation of the actuator being controlled by the actuator control circuit; and
an XY stage on which the primary coil is placed, the XY stage being driven by the actuator.

According to another aspect of the invention, there is provided a non-contact power transmission system comprising:
the above power-transmitting-side device; and
a power receiving device that receives power transmitted from the power transmitting device of the power-transmitting-side device through a secondary coil.

### BRIEF DESCRIPTION OF THE DRAWINGS

FIGS. 1A and 1B are views showing an example of an application of a non-contact power transmission system utilizing the invention.
FIG. 2 is a circuit diagram showing an example of a specific configuration of each section of a non-contact power transmission system that includes a power transmitting device and a power receiving device.
FIGS. 3A and 3B are views illustrative of the principle of information transmission between a primary-side instrument and a secondary-side instrument.
FIG. 4 is a view illustrative of secondary-side instrument approach detection and an automatic coil position adjustment.
FIGS. 5A to 5F are views illustrative of an increase in inductance that occurs when a magnetic material attached to a secondary coil has approached a primary coil.
FIGS. 6A to 6D are views showing examples of the relative positional relationship between a primary coil and a secondary coil.
FIG. 7 is a view showing the relationship between the relative distance between a primary coil and a secondary coil and the inductance of the primary coil.
FIG. 8 is a view showing a change in the resonance frequency of a resonant circuit including a primary coil due to an increase in inductance.
FIGS. 9A to 9C are views showing examples of a change in the relative positional relationship between a primary coil and a secondary coil.
FIG. 10 is a view illustrative of a method that automatically adjusts the positional relationship between a primary coil and a secondary coil.
FIGS. 11A and 11B are views showing a specific circuit operation for automatically adjusting the positional relationship between a primary coil and a secondary coil.
FIGS. 12A and 12B are views illustrative of the movement (scan) of a primary coil.
FIG. 13 is a flowchart showing a process of automatically adjusting the position of a primary coil.
FIG. 14 is a perspective view showing the basic configuration of an XY stage.

### DESCRIPTION OF EXEMPLARY EMBODIMENTS

At least one embodiment of the invention may enable a primary coil and a secondary coil to be automatically positioned so that the relative positional relationship between the primary coil and the secondary coil can be automatically optimized regardless of the manufacturer, size, type, design, and the like of a secondary-side instrument, for example. This may implement a highly versatile power transmitting device (primary-side device), and also implement a next-generation non-contact power transmission system, for example.
(1) According to one embodiment of the invention, there is provided a power transmission control device that controls power transmission of a power transmitting device of a non-contact power transmission system, the non-contact power transmission system transmitting power from the power transmitting device to a power receiving device via non-contact power transmission through a primary coil and a secondary coil that are electromagnetically coupled, the power transmission control device comprising:
   a power-transmitting-side control circuit that controls power transmission to the power receiving device;
   an actuator control circuit that controls the operation of an actuator, the actuator moving the position of the primary coil in an XY plane;
   a relative position detection signal generation circuit that generates a relative position detection signal relating to the primary coil and the secondary coil based on a coil end voltage or a coil current of the primary coil; and
   a primary coil position control circuit that causes the actuator control circuit to move the position of the primary coil in the XY plane so that the relative positional relationship between the primary coil and the secondary coil indicated by the relative position detection signal is within an allowable range.
   The power transmission control device has the actuator control function utilizing the actuator control circuit in addition to the power transmission control function utilizing the power-transmitting-side control circuit. For example, the relative position detection signal generation circuit generates the relative position detection signal that indicates the relative positional relationship between the primary coil and the power-receiving-side secondary coil based on the coil end voltage or the coil current.
   The actuator control circuit operates the actuator to adjust the position of the primary coil in the XY plane using the relative position detection signal as an index so that the relative positional relationship between the primary coil and the secondary coil is within the allowable range, for example.
   Since the primary coil is automatically moved to an optimum position even if the secondary-side instrument is placed at an approximate position, appropriate power transmission is necessarily implemented. Since appropriate power transmission is necessarily implemented regardless of the size, shape, design, and the like of the secondary-side instrument, the versatility of the non-contact power transmission system is significantly improved.
   Moreover, since the degree of freedom of the design of the secondary-side instrument is not limited, a burden is not imposed on the manufacturer of the secondary-side instrument. The relative position detection signal generation circuit compares the peak value of the coil end voltage with a given threshold voltage, for example.
   The above circuit is a circuit provided in the non-contact power transmission system in order to enable communication between the primary-side instrument and the secondary-side instrument (or a circuit that can be implemented by modifying such a circuit to some extent), for example. Since the relative positional relationship between the coils is detected by effectively utilizing the circuit configuration of the non-contact power transmission system without using a special circuit (e.g., position detection element), the configuration does not become complicated and is easily implemented.
   The primary coil position control circuit may be provided in the power-transmitting-side control circuit (circuit that mainly controls power transmission), the actuator control circuit, or another circuit.
(2) In the power transmission control device according to this embodiment,
   the secondary coil may be a secondary coil provided with a magnetic material; and
   the primary coil position control circuit may cause the actuator control circuit to move the position of the primary coil in the XY plane according to a given scan pattern when the inductance of the primary coil has increased due to approach of the secondary coil provided with the magnetic material so that the coil end voltage or the coil current when driving the primary coil at a given frequency has decreased and reached a first threshold value.
   When the secondary coil provided with the magnetic material has approached the primary coil, the magnetic flux of the primary coil passes through the magnetic material so that the magnetic flux density increases. As a result, the inductance of the primary coil increases. The term "inductance" used herein refers to an inductance (more accurately an apparent inductance) that changes due to the approach of the secondary coil provided with the magnetic material.
   The term "apparent inductance" is distinguished from the inductance (self-inductance) of the primary coil (i.e., the inductance of the primary coil when the primary coil is not affected by the secondary coil). The value of the apparent inductance is obtained by measuring the inductance of the primary coil when the secondary coil has approached the primary coil using a measuring instrument, for example.
   In this specification, the term "apparent inductance" is merely written as "inductance", except for the case where clear statement of the term "apparent inductance" is considered to be necessary.
   When the inductance of the primary coil has increased, the coil end voltage or the coil current when driving the primary coil at a given frequency decreases. This initial change is detected using the first threshold value. For example, the peak value of the coil end voltage is compared with the first threshold voltage, and a change in the coil end voltage is detected based on the output level.
   When the coil end voltage or the coil current has reached the first threshold value, the secondary coil has approached the primary coil up to or near a power transmission range. Therefore, the actuator is then driven to scan the primary coil according to a given scan pattern so that the primary coil and the secondary coil become closer.
(3) In the power transmission control device according to this embodiment,
   the primary coil position control circuit may cause the actuator control circuit to stop moving the primary coil when the coil end voltage or the coil current has further decreased and reached a second threshold value due to the movement of the position of the primary coil.
   When the relative distance between the primary coil and the secondary coil is further reduced due to the movement of the primary coil, the inductance of the primary coil further increases so that the coil end voltage or the coil current further decreases. The movement of the primary coil is stopped when the coil end voltage or the coil current has reached the second threshold value.
   When the coil end voltage or the coil current has reached the second threshold value, the secondary coil has approached the primary coil up to the power transmission allowable range. Specifically, the primary coil and the secondary coil have a positional relationship appropriate for power transmission.
   The position of the primary coil can be easily adjusted by utilizing the information (coil relative position information) obtained from a circuit originally provided in the non-contact power transmission system without using a special position detection signal.
(4) In the power transmission control device according to this embodiment,
   the power-transmitting-side control circuit may intermittently drive the primary coil using a drive signal having a given frequency in order to detect the approach of the secondary coil, and may continuously drive the primary coil when the primary coil is scanned.
   The approach of the secondary-side instrument (secondary coil) can thus be automatically detected while automatically adjusting the position of the primary coil. Specifically, the power transmission control device drives the primary coil intermittently (e.g., in a given cycle) in order to detect the approach of the secondary-side instrument (secondary coil). The approach of the secondary coil can be detected based on the primary coil end voltage (or coil current) in the drive period of the primary coil, as described above.
   When the approach of the secondary coil has been detected, the primary coil is continuously driven instead of intermittently driving the primary coil, for example. This makes it possible to continuously monitor the coil end voltage (coil current). The position of the primary coil is then moved, and the allowable position is searched for using a change in the coil end voltage (current) as an index.
   According to this embodiment, the approach of the secondary-side instrument (secondary coil) can be automatically detected while automatically adjusting the position of the primary coil. Since a position detection element or the like need not be additionally provided, the circuit configuration can be simplified.
(5) According to another embodiment of the invention, there is provided a power transmitting device comprising:
   the above power transmission control device; and
   the primary coil.
   According to this embodiment, the primary coil and the secondary coil can be automatically positioned so that the relative positional relationship between the primary coil and the secondary coil can be automatically optimized regardless of the manufacturer, size, type, design, and the like of a secondary-side instrument. Therefore, a power transmitting device with high versatility is implemented.
(6) According to another embodiment of the invention, there is provided a power-transmitting-side device of a non-contact power transmission system, the power-transmitting-side device comprising:
   the above power transmitting device;
   an actuator, the operation of the actuator being controlled by the actuator control circuit; and
   an XY stage on which the primary coil is placed, the XY stage being driven by the actuator.
   The power-transmitting-side device according to this embodiment is a primary-side structure for non-contact power transmission that includes the power transmitting device, the actuator, and the XY stage driven by the actuator, for example.
   The power-transmitting-side device may be provided in a structure (e.g., desk) having a flat surface, for example. Therefore, a portable terminal or the like can be charged merely by placing the portable terminal or the like in a given area of a structure (e.g., desk) having a flat surface without using a dedicated cradle, whereby the convenience of a non-contact power transmission system can be significantly improved.
(7) According to another embodiment of the invention, there is provided a non-contact power transmission system comprising:
   the above power-transmitting-side device; and
   a power receiving device that receives power transmitted from the power transmitting device of the power-transmitting-side device through a secondary coil.
      This implements a highly versatile and convenient next-generation non-contact power transmission system that enables the position of the primary coil to be automatically adjusted to enable charging or the like merely by placing a portable terminal or the like in a given area of a structure (e.g., desk) having a flat surface.
      Preferred embodiments of the invention are described below with reference to the drawings. Note that the following embodiments do not in any way limit the scope of the invention defined by the claims laid out herein. Note that all elements of the following embodiments should not necessarily be taken as essential requirements for the invention.

### First embodiment

An application example of a non-contact power transmission system utilizing the invention is given below.

### Application example of non-contact power transmission system

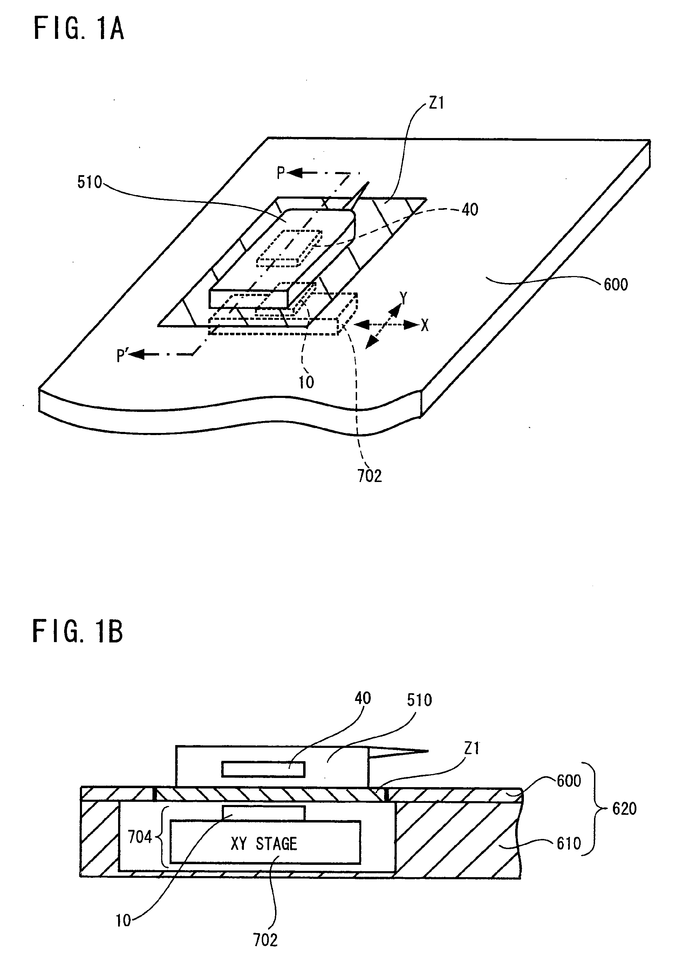

FIGS. 1A and 1B are views showing an example of an application of a non-contact power transmission system utilizing the invention. FIG. 1A is a perspective view showing a system desk, and FIG. 1B is a cross-sectional view of the system desk shown in FIG. 1A along the line P-P'.

FIG. 1B also shows an example of a power-transmitting-side device according to the invention. The power-transmitting-side device is a primary-side structure that includes a power transmitting device 10 according to the invention, an actuator (not shown), and an XY stage 702. A power-transmitting-side device 704 is provided in a structure (system desk for office work in this example) 620 having a flat surface.

Specifically, the power-transmitting-side device 704 is placed in a depression formed in the system desk 620. A flat plate (e.g., an acrylic plate having a thickness of several millimeters) 600 is provided over (on the upper side of) the system desk 620. The flat plate 600 is supported by a support member 610.

The flat plate 600 includes a portable terminal placement area Z1 in which a portable terminal (including a portable telephone terminal, a PDA terminal, and a portable computer terminal) is placed.

As shown in FIG. 1A, the portable terminal placement area Z1 included in the flat plate 600 differs in color from the remaining area so that the user can determine that the portable terminal placement area Z1 is an area in which a portable terminal should be placed. Note that the color of the boundary area between the portable terminal placement area Z1 and the remaining area may be changed instead of changing the color of the entire portable terminal placement area Z1.

A portable terminal (secondary-side instrument) 510 includes a power receiving device 40 (including a secondary coil) that receives power transmitted from the power transmitting device 10.

When the portable terminal 510 has been placed at an approximate position in the portable terminal placement area Z1, the power transmitting device 10 provided in the system desk 620 automatically detects that the portable terminal 510 has been placed in the portable terminal placement area Z1, and moves the XY stage (movable stage) by driving the actuator (not shown in FIG. 1) to automatically adjust the position of the primary coil corresponding to the position of the secondary coil. The above-described primary coil position automatic adjustment function enables non-contact power transmission to be performed while optimizing the positional relationship between the primary coil and the secondary coil regardless of the manufacturer, type, size, shape, design, and the like of the portable terminal. Configuration and operation of non-contact power transmission system

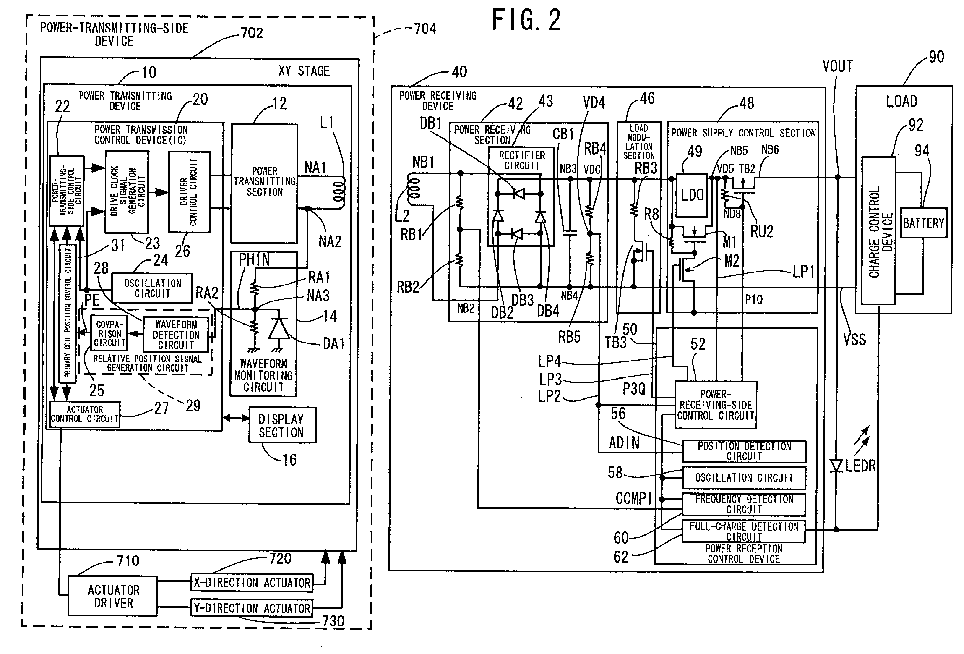

FIG. 2 is a circuit diagram showing an example of a specific configuration of each section of a non-contact power transmission system that includes a power transmitting device and a power receiving device.

### Configuration and operation of power transmitting device

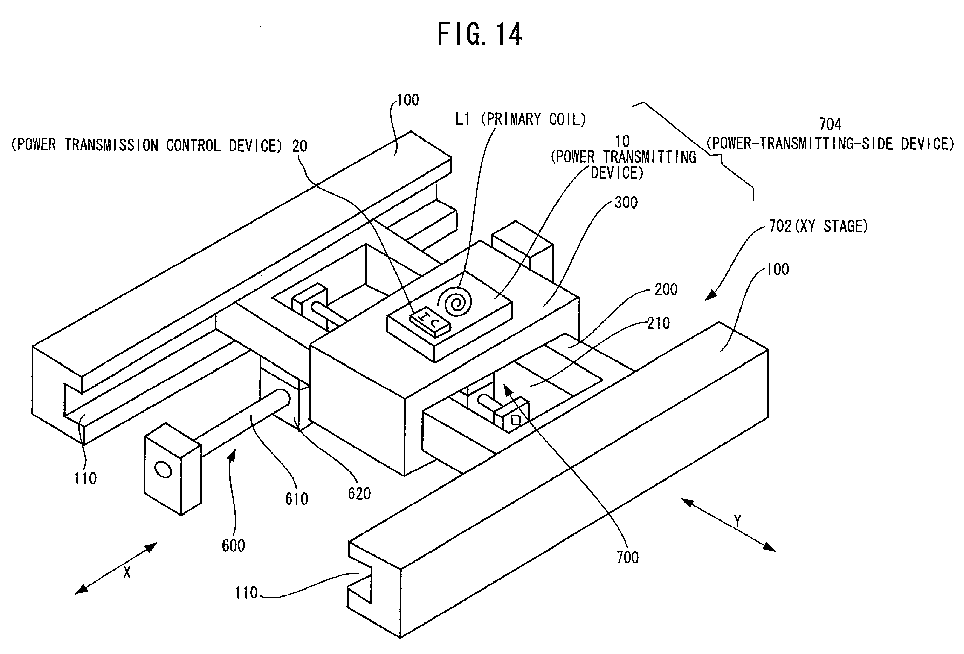

As shown in FIG. 2, the power-transmitting-side device (primary-side structure) 704 includes the XY stage (movable stage) 702, the power transmitting device 10 that is provided so that it can be moved by the XY stage 702 in an X-axis direction and a Y-axis direction, an actuator driver 710, an X-direction actuator 720, and a Y-direction actuator 730. Specifically, the power transmitting device 10 is placed on a top plate (movable plate) of the XY stage 702 (described later with reference to FIG. 14).

The power transmitting device 10 includes a power transmission control device 20, a power transmitting section 12, and a waveform monitoring circuit 14. The power transmission control device 20 includes a power-transmitting-side control circuit 22, a drive clock signal generation circuit 23, an oscillation circuit 24, a comparison circuit 25, a driver control circuit 26, an actuator control circuit 27, a waveform detection circuit (peak-hold circuit or pulse width detection circuit) 28, and a primary coil position control circuit 31.

The waveform detection circuit 28 and the comparison circuit 25 function as a relative position signal generation circuit 29 that generates a relative position signal that indicates the relative positional relationship (relative distance) between a primary coil L1 and a secondary coil L2.

The power receiving device 40 includes a power receiving section 42, a load modulation section 46, and a power supply control section 48. A load 90 includes a charge control device 92 and a battery (secondary battery) 94.

The configuration shown in FIG. 2 implements a non-contact power transmission (contactless power transmission) system that electromagnetically couples the primary coil L1 and the secondary coil L2 to transmit power from the power transmitting device 10 to the power receiving device 40 and supply power (voltage VOUT) to the load 90 from a voltage output node NB6 of the power receiving device 40.

The power transmitting device 10 (power transmitting module or primary module) may include the primary coil L1, the power transmitting section 12, the waveform monitoring circuit 14, a display section 16, and the power transmission control device 20. The power transmitting device 10 and the power transmission control device 20 are not limited to the configuration shown in FIG. 2. Various modifications may be made such as omitting some of the elements (e.g., display section and waveform monitoring circuit), adding other elements, or changing the connection relationship.

The power transmitting section 12 generates an alternating-current voltage having a given frequency during power transmission, and generates an alternating-current voltage having a frequency that differs depending on data during data transfer. The power transmitting section 12 supplies the generated alternating-current voltage to the primary coil L1.

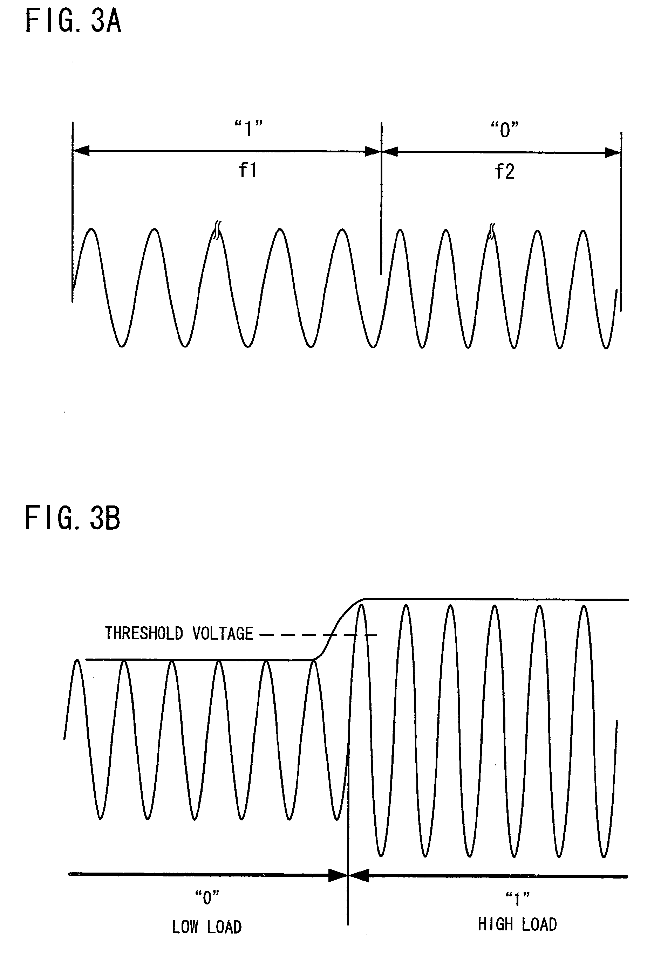

FIGS. 3A and 3B are views illustrative of the principle of information transmission between a primary-side instrument and a secondary-side instrument. Information is transmitted from the primary-side instrument to the secondary-side instrument utilizing frequency modulation. Information is transmitted from the secondary-side instrument to the primary-side instrument utilizing load modulation.

As shown in the FIG. 3A, the power transmitting device 10 generates an alternating-current voltage having a frequency f1 when transmitting data "1" to the power receiving device 40, and generates an alternating-current voltage having a frequency f2 when transmitting data "0" to the power receiving device 40, for example.

As shown in FIG. 3B, the power receiving device 40 can switch the load state of the power receiving device between a low-load state and a high-load state by load modulation to transmit data "0" or "1" to the primary-side instrument (power transmitting device 10).

The power transmitting section 12 shown in FIG. 2 may include a first power transmitting driver that drives one end of the primary coil L1, a second power transmitting driver that drives the other end of the primary coil L1, and at least one capacitor that forms a resonant circuit with the primary coil L 1.

Each of the first and second power transmitting drivers included in the power transmitting section 12 is an inverter circuit (or buffer circuit) that includes a power MOS transistor, for example, and is controlled by the driver control circuit 26 of the power transmission control device 20.

The primary coil L1 (power-transmitting-side coil) is electromagnetically coupled to the secondary coil L2 (power-receiving-side coil) to form a power transmission transformer. For example, when power transmission is necessary, the portable telephone 510 is placed on the structure (system desk) 620 (see FIG. 1) so that a magnetic flux of the primary coil L1 passes through the secondary coil L2. When power transmission is unnecessary, the portable telephone 510 is physically separated from the structure 620 so that a magnetic flux of the primary coil L1 does not pass through the secondary coil L2.

As the primary coil L1 and the secondary coil L2, a planar coil formed by spirally winding an insulated wire in a single plane may be used, for example. Note that a planar coil formed by spirally winding a twisted wire (i.e., a wire obtained by twisting a plurality of insulated thin wires) may also be used. The type of coil is not particularly limited.

The waveform monitoring circuit 14 is a circuit that detects an induced voltage in the primary coil L1. The waveform monitoring circuit 14 may include resistors RA1 and RA2, and a diode DA1 provided between a common connection point NA3 of the resistors RA1 and RA2 and a power supply GND (low-potential-side power supply in a broad sense), for example. Specifically, a signal PHIN obtained by dividing the induced voltage in the primary coil L1 using the resistors RA1 and RA2 is input to the waveform detection circuit 28 of the power transmission control device 20.

The display section 16 displays the state (e.g., power transmission or ID authentication) of the non-contact power transmission system using a color, an image, or the like. The display section 16 is implemented by a light-emitting diode (LED), a liquid crystal display (LCD), or the like.

The power transmission control device 20 controls the power transmitting device 10. The power transmission control device 20 may be implemented by an integrated circuit device (IC) or the like. The power transmission control device 20 includes the power-transmitting-side control circuit 22, the drive clock signal generation circuit 23, the oscillation circuit 24, the driver control circuit 26, the waveform detection circuit 28, the comparison circuit 25, the primary coil position control circuit 31, and the actuator control circuit 27.

The power-transmitting-side control circuit 22 controls the power transmitting device 10 and the power transmission control device 20. The power-transmitting-side control circuit 22 may be implemented by a gate array, a microcomputer, or the like.

Specifically, the power-transmitting-side control circuit 22 performs sequence control and a determination process necessary for power transmission, load detection, frequency modulation, foreign object detection, removal (detachment) detection, and the like.

The oscillation circuit 24 includes a crystal oscillation circuit or the like, and generates a primary-side clock signal. The drive clock signal generation circuit 23 generates a drive control signal having a desired frequency based on a clock signal generated by the oscillation circuit 24 and a frequency setting signal supplied from the power-transmitting-side control circuit 22.

The driver control circuit 26 outputs the drive control signal to the power transmitting drivers (not shown) of the power transmitting section 12 while preventing a situation in which the power transmitting drivers (not shown) are turned ON simultaneously to control the operations of the power transmitting driver, for example.

The waveform detection circuit 28 monitors the waveform of the signal PHIN that corresponds to an induced voltage at one end of the primary coil L1, and performs load detection, foreign object detection, and the like. For example, when the load modulation section 46 of the power receiving device 40 has performed load modulation for transmitting data to the power transmitting device 10, the signal waveform of the induced voltage in the primary coil L 1 changes correspondingly.

As shown in FIG. 3B, the amplitude (peak voltage) of the signal waveform decreases when the load modulation section 46 of the power receiving device 40 reduces the load in order to transmit data "0", and increases when the load modulation section 46 increases the load in order to transmit data "1". Therefore, the waveform detection circuit 28 can determine whether the data transmitted from the power receiving device 40 is "0" or "1" by determining whether or not the peak voltage has exceeded a threshold voltage by performing a peak-hold process on the signal waveform of the induced voltage, for example. Note that the waveform detection method is not limited to the above-described method. For example, the waveform detection circuit 28 may determine whether the power-receiving-side load has increased or decreased utilizing a physical quantity other than the peak voltage. For example, whether the power-receiving-side load has increased or decreased may be determined utilizing the peak current.

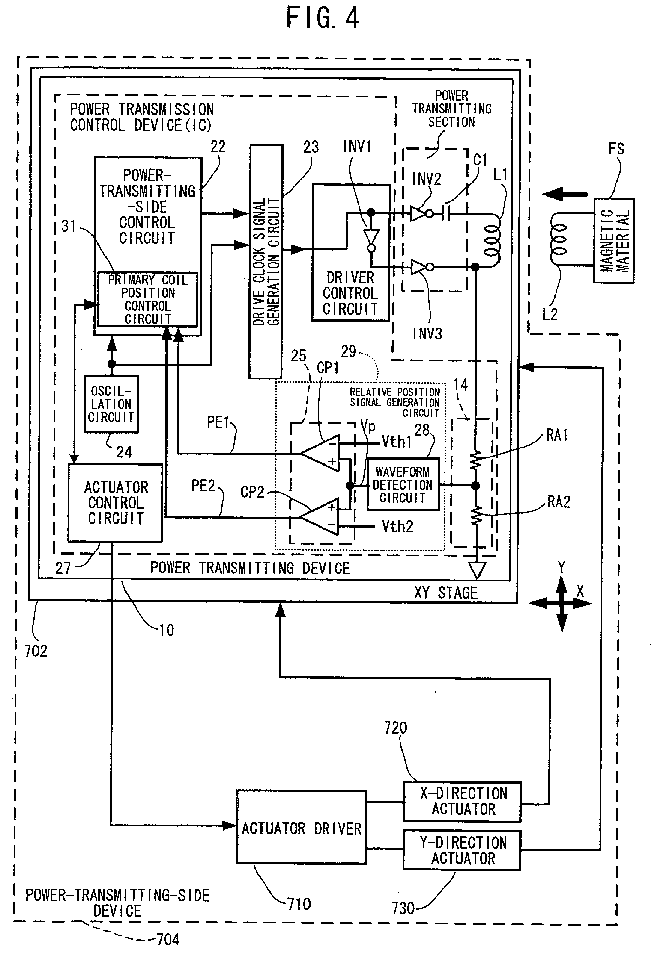

As the waveform detection circuit 28, a peak-hold circuit (or a pulse width detection circuit that detects the pulse width determined by the phase difference between a voltage and a current) may be used. A relative position signal PE that indicates the relative positional relationship between the primary coil L1 and the secondary coil L2 is obtained by comparing the level of an output signal from the waveform detection circuit 28 with a given threshold value using the comparison circuit 25 (described later with reference to FIG. 4).

### Configuration and operation of power receiving device

The power receiving device 40 (power receiving module or secondary module) may include the secondary coil L2, the power receiving section 42, the load modulation section 46, the power supply control section 48, and a power reception control device 50. Note that the power receiving device 40 and the power reception control device 50 are not limited to the configuration shown in FIG. 2. Various modifications may be made such as omitting some of the elements, adding other elements, or changing the connection relationship.

The power receiving section 42 converts an alternating-current induced voltage in the secondary coil L2 into a direct-current voltage. A rectifier circuit 43 included in the power receiving section 42 converts the alternating-current induced voltage. The rectifier circuit 43 includes diodes DB 1 to DB4. The diode DB 1 is provided between a node NB1 at one end of the secondary coil L2 and a node NB3 (direct-current voltage VDC generation node). The diode DB2 is provided between the node NB3 and a node NB2 at the other end of the secondary coil L2. The diode DB3 is provided between the node NB2 and a node NB4 (VSS). The diode DB4 is provided between the nodes NB4 and NB1.

Resistors RB1 and RB2 of the power receiving section 42 are provided between the nodes NB 1 and NB4. A signal CCMPI obtained by dividing the voltage between the nodes NB1 and NB4 using the resistors RB1 and RB2 is input to a frequency detection circuit 60 of the power reception control device 50.

A capacitor CB1 and resistors RB4 and RB5 of the power receiving section 42 are provided between the node NB3 (direct-current voltage VDC) and the node NB4 (VSS). A signal VD4 obtained by dividing the voltage between the nodes NB3 and NB4 using the resistors RB4 and RB5 is input to a power-receiving-side control circuit 52 and a position detection circuit 56 through a signal line LP2. The divided voltage VD4 is input to the position detection circuit 56 as a position detection signal input (ADIN).

The load modulation section 46 performs a load modulation process. Specifically, when the power receiving device 40 transmits desired data to the power transmitting device 10, the load modulation section 46 variably changes the load of the load modulation section 46 (secondary side) depending on the transmission target data to change the signal waveform of the induced voltage in the primary coil L1. The load modulation section 46 includes a resistor RB3 and a transistor TB3 (N-type CMOS transistor) provided in series between the nodes NB3 and NB4.

The transistor TB3 is ON/OFF-controlled based on a control signal P3Q supplied from the power-receiving-side control circuit 52 of the power reception control device 50 through a signal line LP3. When performing the load modulation process by ON/OFF-controlling the transistor TB3 and transmitting a signal to the power transmitting device in an authentication stage before normal power transmission starts, a transistor TB2 of the power supply control section 48 is turned OFF so that the load 90 is not electrically connected to the power receiving device 40.

For example, when reducing the secondary-side load (high impedance) in order to transmit data "0", the signal P3Q is set at the L level so that the transistor TB3 is turned OFF. As a result, the load of the load modulation section 46 becomes almost infinite (no load). On the other hand, when increasing the secondary-side load (low impedance) in order to transmit data "1", the signal P3Q is set at the H level so that the transistor TB3 is turned ON. As a result, the load of the load modulation section 46 is equivalent to the resistor RB3 (high load).

The power supply control section 48 controls power supply to the load 90. A regulator (LDO) 49 regulates the voltage level of the direct-current voltage VDC obtained by conversion by the rectifier circuit 43 to generate a power supply voltage VD5 (e.g., 5 V). The power reception control device 50 operates based on the power supply voltage VD5 supplied from the power supply control section 48, for example.

A switch circuit formed using a PMOS transistor (M1) is provided between the input terminal and the output terminal of the regulator (LDO) 49. A path that bypasses the regulator (LDO) 49 is formed by causing the PMOS transistor (M1) (switch circuit) to be turned ON. For example, since a power loss increases due to the equivalent impedance of the regulator 49 and heat generation increases under heavy load (e.g., when it is necessary to cause an almost constant large current to steadily flow in the initial stage of charging a secondary battery exhausted to a large extent), a current is supplied to the load through a path that bypasses the regulator.

An NMOS transistor (M2) and a pull-up resistor R8 that function as a bypass control circuit are provided to ON/OFF-control the PMOS transistor (M1) (switch circuit).

The NMOS transistor (M2) is turned ON when a high-level control signal supplied from the power-receiving-side control circuit 52 is supplied to the gate of the NMOS transistor (M2) through a signal line LP4. This causes the gate of the PMOS transistor (M1) to be set at a low level so that the PMOS transistor (M1) is turned ON, whereby a path that bypasses the regulator (LDO) 49 is formed. When the NMOS transistor (M2) is turned OFF, the gate of the PMOS transistor (M1) is maintained at a high level through the pull-up resistor R8. Therefore, the PMOS transistor (M1) is turned OFF so that the bypass path is not formed.

The NMOS transistor (M2) is ON/OFF-controlled by the power-receiving-side control circuit 52 included in the power reception control device 50.

The transistor TB2 (P-type CMOS transistor) is provided between a power supply voltage (VD5) generation node NB5 (output node of the regulator 49) and the node NB6 (voltage output node of the power receiving device 40), and is controlled based on a signal P1Q output from the power-receiving-side control circuit 52 of the power reception control device 50. Specifically, the transistor TB2 is turned ON when normal power transmission is performed after completion (establishment) of ID authentication.

The power reception control device 50 controls the power receiving device 40. The power reception control device 50 may be implemented by an integrated circuit device (IC) or the like. The power reception control device 50 may operate based on the power supply voltage VD5 generated based on the induced voltage in the secondary coil L2. The power reception control device 50 may include the (power-receiving-side) control circuit 52, the position detection circuit 56, an oscillation circuit 58, the frequency detection circuit 60, and a full-charge detection circuit 62.

The power-receiving-side control circuit 52 controls the power receiving device 40 and the power reception control device 50. The power-receiving-side control circuit 52 may be implemented by a gate array, a microcomputer, or the like. The power-receiving-side control circuit 52 operates based on a constant voltage (VD5) at the output terminal of the series regulator (LDO) 49 as a power supply voltage. The power supply voltage (VD5) is supplied to the power-receiving-side control circuit 52 through a power supply line LP 1.

The power-receiving-side control circuit 52 performs sequence control and a determination process necessary for ID authentication, position detection, frequency detection, full-charge detection, load modulation for authentication communication, load modulation for communication that enables detection of foreign object insertion, and the like.

The position detection circuit 56 monitors the waveform of the signal ADIN that corresponds to the waveform of the induced voltage in the secondary coil L2, and determines whether or not the positional relationship between the primary coil L1 and the secondary coil L2 is appropriate.

Specifically, the position detection circuit 56 converts the signal ADIN into a binary value using a comparator, and determines whether or not the positional relationship between the primary coil L 1 and the secondary coil L2 is appropriate.

The oscillation circuit 58 includes a CR oscillation circuit or the like, and generates a secondary-side clock signal. The frequency detection circuit 60 detects the frequency (f1 or f2) of the signal CCMPI, and determines whether the data transmitted from the power transmitting device 10 is "1" or "0".

The full-charge detection circuit 62 (charge detection circuit) detects whether or not the battery 94 of the load 90 has been fully charged (full-charge state). Specifically, the full-charge detection circuit 62 detects the full-charge state by detecting whether a light-emitting device LEDR used to indicate the charge state is turned ON or OFF, for example. The full-charge detection circuit 62 determines that the battery 94 has been fully charged (charging has been completed) when the light-emitting device LEDR has been turned OFF for a given period of time (e.g., five seconds).

The charge control device 92 of the load 90 can also detect the full-charge state based on the ON/OFF state of the light-emitting device LEDR.

The load 90 includes the charge control device 92 that controls charging of the battery 94 and the like. The charge control device 92 detects the full-charge state based on the ON/OFF state of the light-emitting device (LEDR). The charge control device 92 (charge control IC) may be implemented by an integrated circuit device or the like. The battery 94 may be provided with the function of the charge control device 92. Note that the load 90 is not limited to a secondary battery. For example, a given circuit may serve as a load when the circuit operates.

### Secondary-side instrument approach detection and coil position adjustment

FIG. 4 is a view illustrative of secondary-side instrument approach detection and an automatic coil position adjustment. FIG. 4 shows the internal configuration of the power transmitting device 10 shown in the FIG. 2 in detail.

In FIG. 4, the primary coil position control circuit 31 is provided in the power-transmitting-side control circuit 22. In this example, the waveform detection circuit 28 is a peak-hold circuit. The waveform detection circuit 28 outputs a peak voltage Vp of the coil end voltage.

The comparison circuit 25 includes a first comparator CP1 and a second comparator CP2. The first comparator CP1 compares the coil-end peak voltage Vp with a first threshold voltage Vth1, and generates a first relative position signal PE1 corresponding to the comparison result. Likewise, the second comparator CP2 compares the coil-end peak voltage Vp with a second threshold voltage Vth2, and generates a second relative position signal PE2 corresponding to the comparison result.

The primary coil position control circuit 31 detects the approach of the secondary-side instrument (secondary coil L2) based on the relative position signals (PE1 and PE2), and moves the position of the primary coil L1 in the XY plane using the relative position signals (PE1 and PE2) as indices to achieve an automatic coil position adjustment.

### Coil relative position detection principle

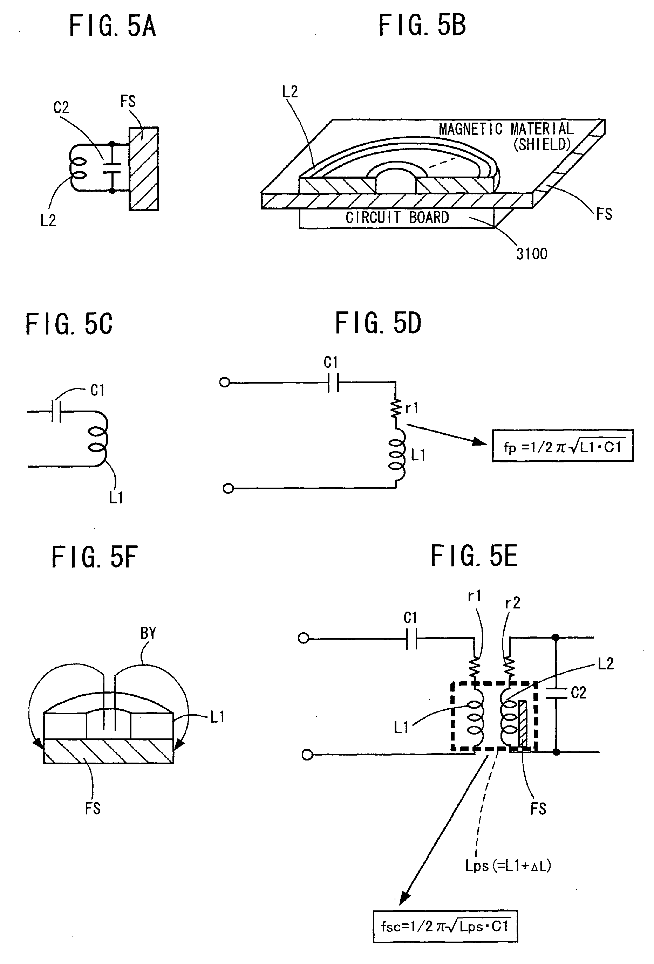

An example of the coil relative position detection principle is described below with reference to FIGS. 5 to 11.

FIGS. 5A to 5F are views illustrative of an increase in inductance that occurs when a magnetic material attached to the secondary coil has approached the primary coil. The term "inductance" used herein refers to an inductance (more accurately an apparent inductance) that changes due to the approach of the secondary coil provided with a magnetic material, as described above. The term "apparent inductance" is distinguished from the inductance (self-inductance) of the primary coil (i.e., the inductance of the primary coil when the primary coil is not affected by the secondary coil). In the following description, the apparent inductance is indicated by Lps.

As shown in FIG. 5A, a magnetic material (FS) is attached to the secondary coil L2. As shown in FIG. 5B, the magnetic material (FS) is a magnetic material used as a magnetic shielding material provided between the secondary coil L2 (i.e., planar coil) and a circuit board 3100, for example. Note that the magnetic material (FS) is not limited thereto, but may be a magnetic material used as a core of the secondary coil L2.

FIG. 5D shows an equivalent circuit of the primary coil L1 shown in FIG. 5C. The resonance frequency of the primary coil L1 is fp (=1/{2π(L1·C1)^{1/2}}), as shown in FIG. 5D. Specifically, the resonance frequency fp is determined by the inductance L1 of the primary coil L1 and the capacitance C1 of the resonant capacitor C1.

As shown in FIG. 5E, when the secondary coil L2 has approached the primary coil L1, the magnetic material (FS) attached to the secondary coil L1 is coupled to the primary coil L1. Therefore, the magnetic flux of the primary coil (L1) passes through the magnetic material (FS) (see FIG. 5F) so that the magnetic flux density increases. As a result, the inductance of the primary coil L 1 increases. In this case, the resonance frequency of the primary coil L1 is fsc (=1/{2π(Lps·C1)^{1/2}}), as shown in FIG. 5E. Specifically, the resonance frequency is determined by the apparent inductance Lps of the primary coil for which the approach of the secondary coil is taken into consideration, and the capacitance C 1 of the primary-side resonant capacitor C1.

The apparent inductance Lps of the primary coil is expressed by Lps=L1+ΔL (where, L1 is the inductance (self-inductance) of the primary coil, and ΔL is an increase in inductance due to the approach of the magnetic material FS to the primary coil). A specific value of the apparent inductance Lps may be detected (acquired) by measuring the inductance of the primary coil when the secondary coil has approached the primary coil using a measuring instrument, for example.

A change in the inductance of the primary coil due to the approach of the secondary coil is discussed below.

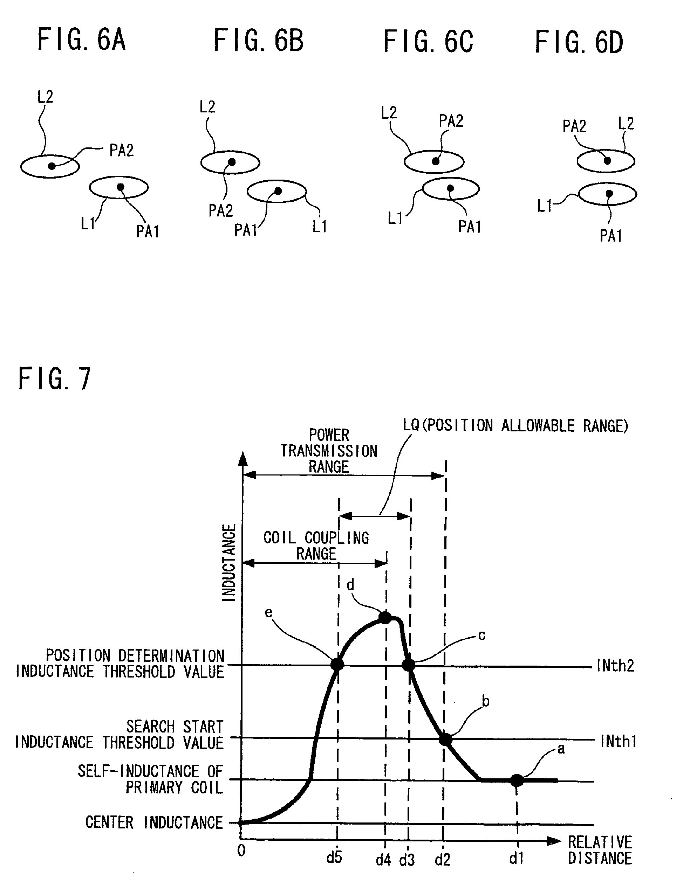

FIGS. 6A to 6D are views showing examples of the relative positional relationship between the primary coil and the secondary coil. In FIGS. 6A to 6D, PA1 indicates the center of the primary coil L1, and PA2 indicates the center of the secondary coil L2.

In FIG. 6A, since the secondary coil L2 is positioned away from the primary coil L1, the primary coil L1 is not affected by the secondary coil L2. When the secondary coil (L2) has approached the primary coil (L1), as shown in FIG. 6B, the inductance of the primary coil L1 increases, as described with reference to FIGS. 5E and 5F. In FIG. 6C, the primary coil L1 and the secondary coil L2 are coupled so that mutual induction (i.e., a phenomenon in which the magnetic flux of one coil is canceled by the magnetic flux of the other coil) occurs in addition to self-induction. When the position of the secondary coil L2 has coincided with the position of the primary coil L1, as shown in FIG. 6D, a current flows through the secondary coil (L2) so that a leakage magnetic flux decreases due to cancellation of the magnetic flux as a result of mutual induction, whereby the inductance of the primary coil L 1 decreases.

Specifically, the secondary-side instrument starts to operate as a result of the position adjustment. A current flows through the secondary coil (L2) due to the operation of the secondary-side instrument so that a leakage magnetic flux decreases due to cancellation of the magnetic flux as a result of mutual induction, whereby the inductance of the primary coil (L1) decreases.

FIG. 7 is a view showing the relationship between the relative distance between the primary coil and the secondary coil and the inductance of the primary coil. In FIG. 7, the horizontal axis indicates the relative distance, and the vertical axis indicates the inductance. The term "relative distance" used herein refers to a relative value obtained by normalizing the distance between the centers of the two coils in the horizontal direction. The relative distance is an index that indicates the distance between the coils in the horizontal direction. An absolute distance (e.g., an absolute value (mm) that indicates the distance between the centers of the coils in the horizontal direction) may be used instead of the relative distance.

In FIG. 7, when the relative distance is d1, the primary coil L1 is not affected by the secondary coil. In this case, the inductance of the primary coil L1 is "a" (i.e., the self-inductance of the primary coil). When the secondary coil L2 has approached the primary coil L1 (relative distance: d2), the magnetic flux density increases due to the magnetic material so that the inductance of the primary coil L1 increases to "b".

When the secondary coil L2 has further approached the primary coil L1 (relative distance: d3), the inductance of the primary coil L1 increases to "c". When the secondary coil L2 has further approached the primary coil L1 (relative distance: d4), the inductance of the primary coil L1 increases to "d". The primary coil L1 and the secondary coil L2 are coupled in this state so that the effect of mutual inductance becomes predominant.

Specifically, when the relative distance is d5, since the effect of mutual inductance becomes predominant, the inductance of the primary coil L1 then decreases to "e". When the relative distance is 0 (i.e., the centers of the primary coil and the secondary coil are positioned at the center of the XY plane), a leakage magnetic flux is minimized due to cancellation of the magnetic flux so that the inductance of the primary coil L1 converges to a constant value ("center inductance" in FIG. 7).

The relative distance d2 indicates a power transmission limit range. Desired power transmission can be performed when the relative distance is between d3 and d5. Specifically, the range between d3 and d4 is a position allowable range LQ.

In this case, it is possible to detect that the secondary coil (L2) has approached the primary coil L1 up to the relative distance d2 using an inductance threshold value (INth1). The inductance threshold value INth1 corresponds to the first threshold voltage Vth1 shown in FIG. 4.

Likewise, whether or not the secondary coil (L2) is positioned within the relative distance range between d3 and d5 can be detected using an inductance threshold value (INth2). The inductance threshold value INth2 corresponds to the second threshold voltage Vth2 shown in FIG. 4.

Specifically, whether or not the relative distance between the primary coil and the secondary coil is within the position allowable range (LQ) can be determined by checking an increase in the inductance of the primary coil.

For example, when an increase in inductance due to the approach of the secondary coil (L2) has been detected using the first inductance threshold value (INth1), the secondary coil L2 has approached the primary coil L1 to such an extent that the relative distance is almost within the power transmission range.

The primary coil is then moved (scanned) according to a given scan pattern. When the relative distance between the primary coil (L1) and the secondary coil (L2) has been reduced due to the movement of the primary coil, the inductance of the primary coil L1 increases and then reaches the point c shown in FIG. 7. When it has been detected that the inductance of the primary coil L1 has reached the point c using the second inductance threshold value (INth2), the movement (scan) of the primary coil is stopped. This causes the relative distance between the primary coil (L1) and the secondary coil (L2) to be almost within the range (position allowable range LQ) between d3 and d5, although the relative distance is affected by the damping accuracy of the XY stage used.

When using the above-described position detection method, the positional relationship between the primary coil L1 and the secondary coil L2 cannot be determined when the relative distance between the primary coil L1 and the secondary coil L2 is shorter than the relative distance d5 (i.e., when the relative distance is within a range shorter than the relative distance d5). However, it suffices to detect that the relative distance between the primary coil L1 and the secondary coil L2 is within the position allowable range LQ as an index for the power transmission position adjustment. The above-described position detection method is sufficient for practical applications. Note that the coil relative position detection method is not limited to the above-described method.

### Actual primary coil position control

The above description has been given while focusing on a change in the inductance of the primary coil L1. In the actual situation, when the inductance of the primary coil L1 has changed, the resonance peak of the primary-side LC resonant circuit changes, whereby the coil end voltage (or coil current) of the primary coil L1 changes. Therefore, a change in the coil end voltage (coil current) is detected, and the primary coil L1 is scanned based on the detection result.

For example, when the inductance of the primary coil L1 has increased due to the approach of the secondary coil (L2), the coil end voltage (coil current) changes so that the coil end voltage output from the waveform monitoring circuit 14 shown in FIG. 4 changes. The relative position detection signal generation circuit 29 (including the waveform detection circuit 28 and the comparison circuit 25) shown in FIG. 4 detects the change in the coil end voltage using the first threshold voltage Vth1 (corresponding to the first inductance threshold value INth1). Therefore, the level of the relative position detection signal output from the relative position detection signal generation circuit 29 changes.

The primary coil position control circuit 31 shown in FIG. 4 detects that the secondary coil L2 has approached the primary coil L1 to such an extent that the relative position between the primary coil L1 and the secondary coil L2 is almost within the power transmission range (i.e., the secondary-side instrument shown in FIG. 1 has been placed in the placement area Z1 shown in FIG. 1) from the change in the level of the relative position detection signal.

The primary coil position control circuit 31 shown in FIG. 4 then causes the actuator control circuit 27 to move (scan) the primary coil L1 according to a given scan pattern. When the relative distance between the primary coil (L1) and the secondary coil (L2) has been further reduced due to the movement of the primary coil L1, the inductance of the primary coil L1 increases and then reaches the point c shown in FIG. 7. In this case, the coil end voltage further decreases. The relative position detection signal generation circuit 29 detects the decrease in the coil end voltage using the second threshold voltage Vth2. In this case, the primary coil position control circuit 31 causes the actuator control circuit 27 to stop moving (scanning) the primary coil L1.

The above-described primary coil position control causes the relative distance between the primary coil (L1) and the secondary coil (L2) to be almost within the range (position allowable range LQ) between d3 and d5, although the relative distance is affected by the damping accuracy of the XY stage used.

Specifically, the relative positional relationship between the primary coil L1 and the secondary coil L2 is detected using the voltage threshold values (Vth1 and Vth2) corresponding to the inductance threshold values (INth1 and INth2), and the scan of the primary coil L1 is automatically started/stopped (i.e., scan start/stop is automatically controlled) based on the detection result. The details are described below.

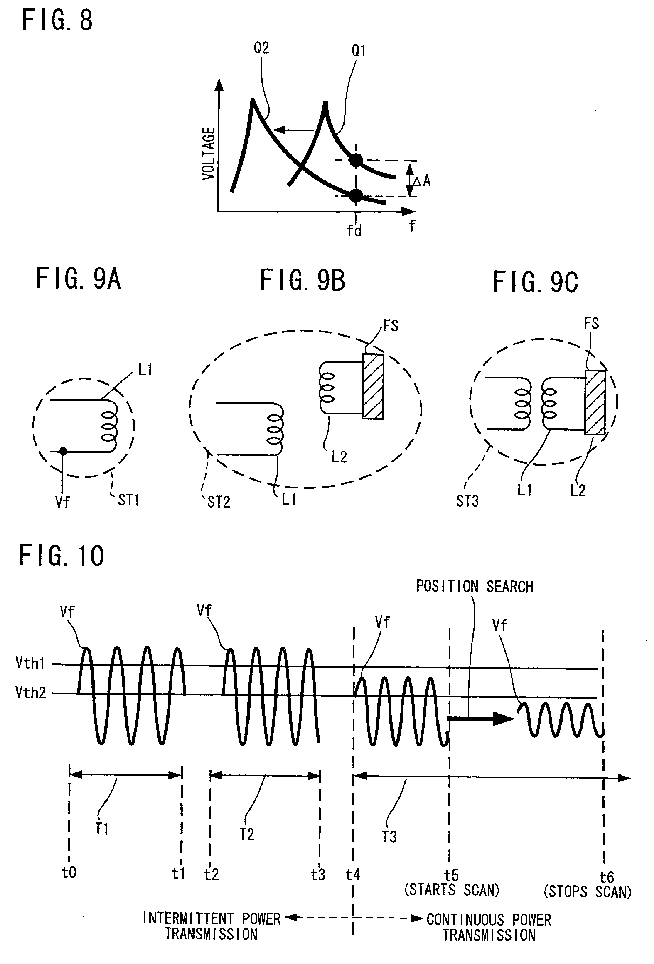

FIG. 8 is a view showing a change in the resonance frequency of the resonant circuit including the primary coil due to an increase in inductance.

When the inductance of the primary coil has increased due to the approach of the magnetic material (FS) attached to the secondary coil L2, the resonance characteristics of the resonant circuit including the primary coil change from Q1 to Q2, as shown in FIG. 8. When the drive frequency of the primary coil is fd, the coil end voltage (or current) decreases by ΔA due to the shift in the resonance characteristics caused by an increase in the inductance of the primary coil L1. The relative position between the primary coil L1 and the secondary coil L2 can be determined based on the coil end voltage (or current) by focusing on the change in the coil end voltage (or current) by ΔA.

FIGS. 9A to 9C are views showing examples of a change in the relative positional relationship between the primary coil and the secondary coil. FIG. 9A shows a state ST1 in which only the primary coil L1 is provided. FIG. 9B shows a state ST2 in which the secondary coil L2 provided with the magnetic material FS has approached the primary coil L1 (position adjustment has not been made). FIG. 9C shows a state ST3 in which the primary coil L1 and the secondary coil L2 have been correctly positioned.

FIG. 10 is a view illustrative of a method of automatically adjusting the positional relationship between the primary coil and the secondary coil.

The power transmission control device 20 (see FIG. 2) intermittently drives the primary coil L1 at a frequency fd in a given cycle, as indicated by a period T1 (between times t0 and t1) and a period T2 (between times t2 and t3) shown in FIG. 10. The primary coil L1 is intermittently driven in a given cycle in order to automatically detect placement of the secondary-side instrument. Since continuous power transmission results in an increase in power consumption, temporary power transmission is intermittently performed.

The periods T1 and T2 shown in FIG. 10 correspond to the state ST1 (i.e., the secondary coil L2 has not approached the primary coil L1) shown in FIG. 9A. The relative position detection signal generation circuit 29 monitors a coil end voltage Vf (or coil current), as shown in FIG. 9.

When the secondary coil L2 has not approached the primary coil L1 (see FIG. 9A), the amplitude Vf of the coil end voltage (alternating-current) is larger than the first threshold voltage Vth1, as indicated by the periods T1 and T2 shown in FIG. 10.

The state ST2 shown in FIG. 9B then occurs. In this case, the coil end voltage Vf is lower than the first voltage threshold value Vth1 during drive from time t4 shown in FIG. 10. This is because the apparent inductance of the primary coil L1 increases due to the approach of the secondary coil L2 so that the resonance peak of the LC resonant circuit is shifted, as described above. Specifically, since a decrease in voltage (ΔA in FIG. 8) due to the shift in the resonance peak increases, the level of the coil end voltage of the primary coil L1 becomes lower than the first threshold voltage Vth1. This enables the primary coil position control circuit 31 provided in the power transmission control device 20 to detect that the secondary coil L2 has approached.

The primary coil position control circuit 31 provided in the power transmission control device 20 must continuously monitor a change in the coil end voltage Vf while scanning the primary coil (L1) to search for the relative positional relationship between the primary coil L1 and the secondary coil L2. Therefore, the power transmission control device 20 switches power transmission from intermittent power transmission to continuous power transmission after the time t4. Continuous power transmission is performed during a period T3 in which the primary coil L1 is moved (scanned).

In FIG. 10, the primary coil L1 starts to be moved (scanned) at a time t5. When the distance between the primary coil L1 and the secondary coil L2 has been reduced by moving (scanning) the primary coil L1 and has fallen within the position allowable range LQ (see FIG. 7), the inductance of the primary coil L1 has further increased. Therefore, a decrease in voltage (ΔA in FIG. 8) due to the shift in the resonance peak increases. Accordingly, the coil end voltage Vf further decreases to a value lower than the second voltage threshold value Vth2.

Therefore, the movement (scan) of the primary coil is stopped, and continuous drive of the primary coil L1 is also stopped. Specifically, the movement (scan) of the primary coil is stopped at a time t6. A state in which the primary coil L1 and the secondary coil L2 have been correctly positioned (i.e., the state ST3 shown in FIG. 9 or a state which may be considered to be the state ST3) is thus implemented.

The approach of the secondary coil L2 (magnetic material FS) is thus automatically detected while automatically adjusting the position of the primary coil L1.

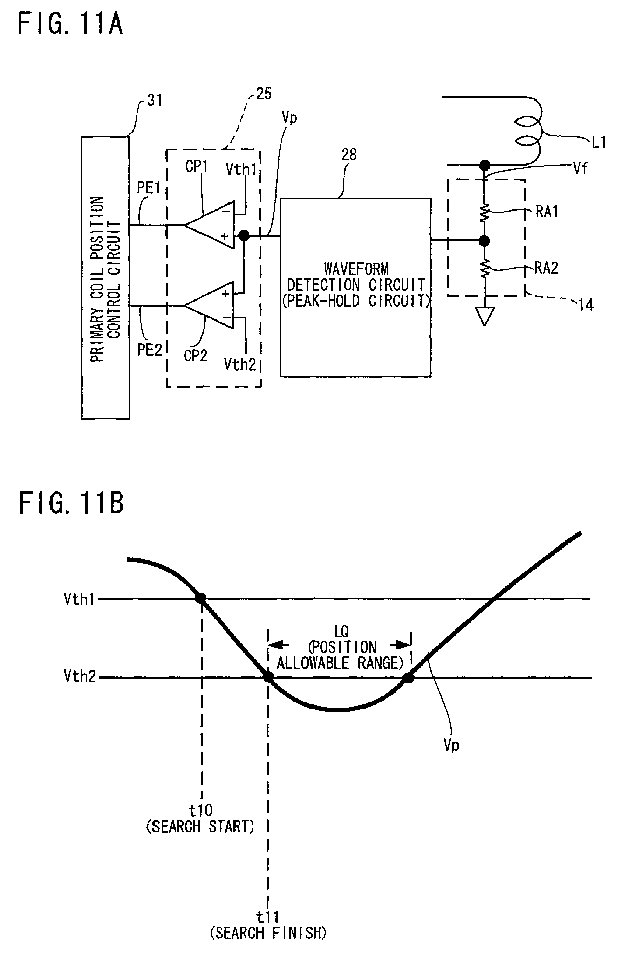

Specifically, an operation shown in FIGS. 11A and 11B is performed. FIGS. 11A and 11B are views showing a specific circuit operation for automatically adjusting the positional relationship between the primary coil and the secondary coil.

As shown in FIG. 11A, the coil end voltage Vf is divided by the resistors RA1 and RA2 included in the waveform monitoring circuit 14, and the peak voltage Vp is detected by the peak-hold circuit 28. The peak voltage Vp is compared with the first and second voltage threshold values (Vth1 and Vth2) by the first and second comparators CP1 and CP2 included in the comparison circuit 25.

When the output signal (relative position signal) PE1 from the first comparator CP1 has changed from the high level to the low level (time t10 in FIG. 11B), the primary coil position control circuit 31 causes the actuator control circuit 27 to start to move the primary coil (L1), and continuously drives the primary coil instead of intermittently driving the primary coil, as described above.

When the output signal (relative position signal) PE2 from the second comparator CP2 has changed from the high level to the low level (time t11 in FIG. 11B), the primary coil position control circuit 31 causes the actuator control circuit 27 to stop moving the primary coil (L1), and stops driving the primary coil.

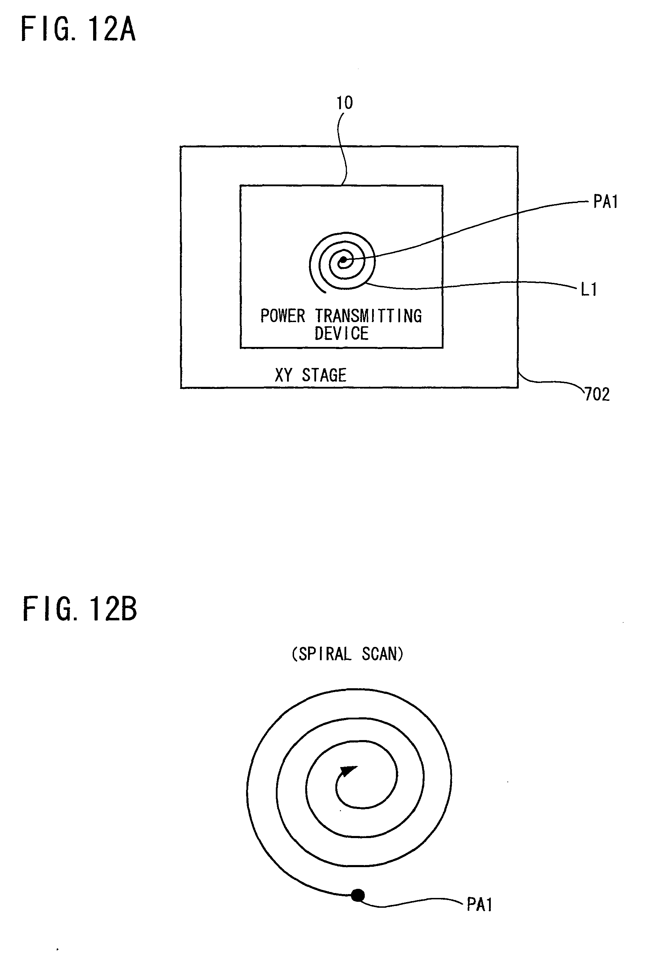

FIGS. 12A and 12B are views illustrative of an example of the movement (scan) of the primary coil. As shown in FIG. 12A, the power transmitting device 10 (power transmitting module) includes the primary coil L1. When moving the position of the primary coil L1, the XY stage 702 is moved in the direction X or the direction Y using the actuator (reference numeral 720 or 730 in FIG. 2). In FIG. 12A, PA1 indicates the center of the primary coil L1.

Specifically, the primary coil L1 is scanned for a position adjustment in a spiral pattern, for example. The position of the primary coil can be accurately moved over a wide range by utilizing a spiral scan. Note that the scan method is not limited thereto. A linear scan may also be employed. A linear scan facilitates scan control of the primary coil L 1.

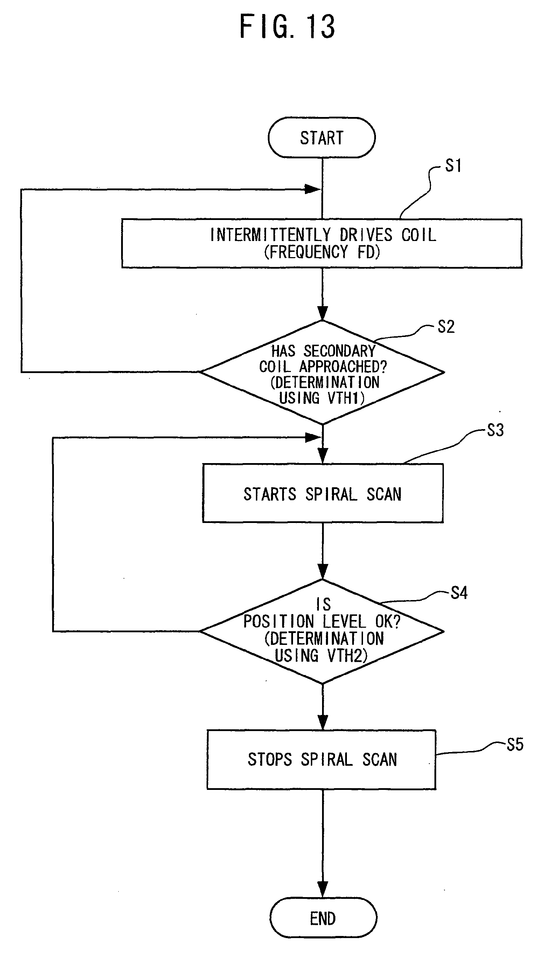

FIG. 13 shows a process of automatically adjusting the position of the primary coil L1 as described above. FIG. 13 is a flowchart showing a process of automatically adjusting the position of the primary coil.

As shown in FIG. 13, the primary coil is intermittently driven (frequency fd) in order to detect the approach of the secondary coil (placement of the secondary-side instrument) (step S1). When the approach of the secondary coil has been detected using the first threshold voltage Vth1 (step S2), the primary coil is driven continuously, and a spiral scan is started, for example (step S3).

When the relative positional relationship between the primary coil and the secondary coil has been determined to be within the allowable range using the second threshold voltage Vth2 (step S4), the continuous drive operation and the spiral scan are stopped (step S5).

### Configuration example and operation of XY stage

An example of the configuration of the XY stage and the operation of the XY stage are described below. FIG. 14 is a perspective view showing the basic configuration of the XY stage.

As shown in FIG. 14, the XY stage 702 includes a pair of guide rails 100, an X-axis slider 200, and a Y-axis slider 300. Aluminum, iron, granite, a ceramic, or the like is used as the material for these members.

The guide rails 100 respectively have guide grooves 110 opposite to each other. The guide rails 100 extend in parallel in the X-axis direction. The guide rails 100 are secured on a surface plate (not shown).

The X-axis slider 200 engages the guide rails 100. The X-axis slider 200 is in the shape of a rectangular flat plate. The ends of the X-axis slider 200 are fitted into the guide grooves 110 so that the X-axis slider 200 can be moved in the X-axis direction along the guide grooves 110, but cannot be moved in the Y-axis direction. Therefore, the X-axis slider 200 can be reciprocated in the X-axis direction along the guide rails 100.

Note that the guide groove 110 formed in the guide rail 100 may be formed in the X-axis slider 200, and the guide rail 100 may have a protrusion that is fitted into the guide groove formed in the X-axis slider 200. It suffices that the engagement portion of the guide rail 100 and the X-axis slider 200 be supported on three sides. The shape of the guide groove is not particularly limited.

The Y-axis slider 300 is provided to enclose the X-axis slider 200. The Y-axis slider 300 has a cross-sectional shape (almost in the shape of the letter U) corresponding to the cross-sectional shape of the X-axis slider 200 in the shape of a rectangular flat plate.

The end of the Y-axis slider 300 almost in the shape of the letter U is bent inward. The upper part of the Y-axis slider 300 may be open. Alternatively, the Y-axis slider 300 may have a cross-sectional shape having no opening.

The ends of the X-axis slider 200 in the widthwise direction that engage the guide grooves 110 are thus supported by the Y-axis slider 300 on the upper side, the side, and the lower side. Since the Y-axis slider 300 is secured on the X-axis slider 200, the movement of the Y-axis slider 300 in the X-axis direction with respect to the X-axis slider 200 is inhibited. When the X-axis slider 200 is moved in the X-axis direction, the Y-axis slider 300 moves in the X-axis direction together with the X-axis slider 200.

The Y-axis slider 300 can be moved in the Y-axis direction with respect to the X-axis slider 200. The X-axis slider 200 functions as an X-axis direction moving member, and also serves as a guide that allows the Y-axis slider 300 to move in the Y-axis direction with respect to the X-axis slider 200. The upper part of the Y-axis slider 300 serves as a top plate (movable main surface) on which an object that is moved along the XY axes is placed.

As shown in FIG. 14, the power transmission device 10 including the primary coil (circular wound coil) L1 and the power transmission control device 20 (IC) is provided on the main surface (top plate) of the Y-axis slider 300. When the primary coil L1 is a wound coil, the volume and the height of the coil can be reduced. This is advantageous when scanning the primary coil L1. Note that the type of the primary coil is not limited to the above-described example.

The XY stage 702 shown in FIG. 14 utilizes a highly accurate linear motor as a drive source. A ball thread mechanism may be used instead of the linear motor.

An X-axis linear motor 600 that moves the X-axis slider 200 is provided between the pair of guide rails 100. A movable member 620 of the X-axis linear motor 600 secured on a rod stator 610 is secured on the lower part of the X-axis slider 200 so that the X-axis slider 200 can be reciprocated.

The Y-axis slider 300 is reciprocated by a Y-axis linear motor 700. A depression 210 is formed in the X-axis slider 200, and the Y-axis linear motor is placed in the depression 210. Therefore, the stage height can be reduced.

The X-axis linear motor 600 and the Y-axis linear motor 700 respectively correspond to the X-direction actuator 720 and the Y-direction actuator 730 shown in FIG. 2.

The power-transmitting-side device (i.e., the primary-side structure of the non-contact power transmission system) 704 is formed by placing the power transmission device 10 including the primary coil (wound coil) L1 and the power transmission control device 20 (IC) on the XY stage 702.

As shown in FIG. 1B, the power-transmitting-side device 704 is provided in a structure (e.g., desk) having a flat surface, for example. This implements the power-transmitting-side device 704 that deals with a next-generation non-contact power transmission system that can automatically move the position of the primary coil in the XY plane corresponding to the position of a secondary coil of a secondary-side instrument (e.g., portable terminal) placed at an approximate position.

As described above, the power transmission control device 20 according to this embodiment intermittently drives the primary coil, and monitors whether or not the coil end voltage (current) has decreased due to an increase in primary-side inductance. When the approach of the secondary-side instrument (i.e., the secondary-side instrument has been placed in a given area Z1) has been detected, the primary coil position control circuit 31 automatically adjusts the position of the primary coil. Therefore, since secondary-side instrument approach detection and a primary coil position adjustment are automatically performed, the user's workload is reduced.

Although only some embodiments of the invention have been described in detail above, those skilled in the art would readily appreciate that many modifications are possible in the embodiments without materially departing from the novel teachings and advantages of the invention. Specifically, many modifications are possible without materially departing from the novel teachings and advantages of the invention.

Accordingly, such modifications are intended to be included within the scope of the invention. Any term (e.g., GND and portable telephone/charger) cited with a different term (e.g., low-potential-side power supply and electronic instrument) having a broader meaning or the same meaning at least once in the specification and the drawings can be replaced by the different term in any place in the specification and the drawings. Any combinations of the embodiments and the modifications are also included within the scope of the invention.

The configurations and the operations of the power transmission control device, the power transmitting device, the power reception control device, and the power receiving device, and the method of detecting the secondary-side load by the primary side instrument are not limited to those described in the above embodiments. Various modifications and variations may be made.

According to at least one aspect of the invention, the following effects can be obtained, for example. Note that the following effects are not necessarily achieved at the same time. Accordingly, the following effects do not in any way limit the scope of the invention.
(1) Since the primary coil is automatically moved to an optimum position even if the secondary-side instrument is placed at an approximate position, appropriate power transmission is necessarily implemented.
(2) Since appropriate power transmission is necessarily implemented regardless of the size, shape, design, and the like of the secondary-side instrument, the versatility of the non-contact power transmission system is significantly improved.
(3) Since the degree of freedom of the design of the secondary-side instrument is not limited, a burden is not imposed on the manufacturer of the secondary-side instrument.
(4) Since the relative positional relationship between the coils is detected by effectively utilizing the circuit configuration of the non-contact power transmission system without using a special circuit (e.g., position detection element), the configuration does not become complicated and is easily implemented.
(5) A highly versatile and convenient next-generation non-contact power transmission system can be implemented that enables the position of the primary coil to be automatically adjusted to enable charging or the like merely by placing a portable terminal or the like in a given area of a structure (e.g., desk) having a flat surface.

The invention achieves the effect of providing a next-generation non-contact power transmission system with significantly improved versatility and convenience. Therefore, the invention is useful for a power transmission control device (power transmission control IC), a power transmitting device (e.g., IC module), a power-transmitting-side device (primary-side structure including a power transmitting device, an actuator, and an XY stage), and a non-contact power transmission system.

Although only some embodiments of the invention have been described in detail above, those skilled in the art would readily appreciate that many modifications are possible in the embodiments without materially departing from the novel teachings and advantages of the invention. Accordingly, such modifications are intended to be included within the scope of the invention.

## Claims

1. A power transmission control device that controls power transmission of a power transmitting device of a non-contact power transmission system, the non-contact power transmission system transmitting power from the power transmitting device to a power receiving device via non-contact power transmission through a primary coil and a secondary coil that are electromagnetically coupled, the power transmission control device comprising:
a power-transmitting-side control circuit that controls power transmission to the power receiving device;
an actuator control circuit that controls the operation of an actuator, the actuator moving the position of the primary coil in an XY plane;
a relative position detection signal generation circuit that generates a relative position detection signal relating to the primary coil and the secondary coil based on a coil end voltage or a coil current of the primary coil; and
a primary coil position control circuit that causes the actuator control circuit to move the position of the primary coil in the XY plane so that the relative positional relationship between the primary coil and the secondary coil indicated by the relative position detection signal is within an allowable range.

2. The power transmission control device as defined in claim 1,
the secondary coil being a secondary coil provided with a magnetic material; and
the primary coil position control circuit causing the actuator control circuit to move the position of the primary coil in the XY plane according to a given scan pattern when the inductance of the primary coil has increased due to approach of the secondary coil provided with the magnetic material so that the coil end voltage or the coil current when driving the primary coil at a given frequency has decreased and reached a first threshold value.

3. The power transmission control device as defined in claim 2,
the primary coil position control circuit causing the actuator control circuit to stop moving the primary coil when the coil end voltage or the coil current has further decreased and reached a second threshold value due to the movement of the position of the primary coil.

4. The power transmission control device as defined in claim 2,
the power-transmitting-side control circuit intermittently driving the primary coil using a drive signal having a given frequency in order to detect the approach of the secondary coil, and continuously driving the primary coil when the primary coil is scanned.

5. A power transmitting device comprising:
the power transmission control device as defined in any one of claims 1 to 4; and
the primary coil.

6. A power-transmitting-side device of a non-contact power transmission system, the power-transmitting-side device comprising:
the power transmitting device as defined in claim 5;
an actuator, the operation of the actuator being controlled by the actuator control circuit; and
an XY stage on which the primary coil is placed, the XY stage being driven by the actuator.

7. A non-contact power transmission system comprising:
the power-transmitting-side device as defined in claim 6; and
a power receiving device that receives power transmitted from the power transmitting device of the power-transmitting-side device through a secondary coil.
